# EUROPÄISCHE PATENTSCHRIFT

(11) **EP 1 436 600 B1**
(45) Veröffentlichungstag und Bekanntmachung des Hinweises auf die Patenterteilung: **11.12.2013**
(21) Anmeldenummer: 02781124.9
(22) Anmeldetag: 04.10.2002
(51) Int. Cl.: G01N 21/78

(54) **Verfahren zur Herstellung eines Gassensors**
Method of manufacturing a gas sensor
Procédé de fabrication d'un capteur de gaz

(30) Priorität: 09.10.2001 DE 10149734
(43) Veröffentlichungstag der Anmeldung: 14.07.2004
(73) Patentinhaber: ROBERT BOSCH GMBH, 70442 Stuttgart (DE)
(72) Erfinder: BRINZ, Thomas, 73266 Bissingen unter Der Teck (DE); POTTHAST, Heidrun, 70839 Gerlingen (DE)
(86) Internationale Anmeldenummer: PCT/DE2002/003765
(87) Internationale Veröffentlichungsnummer: WO 2003/034048

(56) Entgegenhaltungen:
- WO-A-01/35057
- DE-A- 19 835 769
- DE-A- 19 905 776
- GB-A- 2 132 348
- US-A- 5 405 583

## Beschreibung

### Stand der Technik

Die Erfindung geht von einem Verfahren zur Herstellung eines Gassensors gemäß der im Oberbegriff des Patentanspruches 1 näher definierten Art aus.

Ein derartiger Gassensor ist aus der Praxis bekannt und wird beispielsweise im Bereich der Sicherheitstechnik bei einem Brandmeldesensor eingesetzt.

Ein solcher bekannter Gassensor ist als optischer Sensor ausgebildet, welcher eine als Emitter wirkende LED sowie Photodioden zur Detektion der von der LED abgegebenen Strahlung aufweist. Die Photodioden sind mit einem Polymer beschichtet, in welchem ein Sensormaterial für ein bestimmtes Gas, beispielsweise für Kohlendioxid, eingebettet ist. Das Polymer stellt zusammen mit Weichmachern eine Matrix dar, in welcher Farbstoffe, Akzeptoren und/oder Additive gelöst sind, die gassensitive Sensormaterialien darstellen.

Zu detektierende Gasmoleküle müssen bei dem bekannten Gassensor in der Polymermatrix zu den gassensitiven Sensormaterialien diffundieren. Mit zunehmender Schichtdicke der Polymermatrix vergrößert sich die Absorption für das betreffende Gas sowie die Sensitivität des Gassensors. Jedoch verschlechtert sich mit zunehmender Schichtdicke der Polymermatrix das Ansprechverhalten des Gassensors, da sich die Diffusionswege der betreffenden Gasmoleküle in der Polymermatrix verlängern.

WO 01/35057 A2 offenbart ein Verfahren zur Herstellung eines optischen Ammoniak-Gassensors, wobei ein gassensitiver Farbindikator in poröses PTFE eingebettet wird und mit einer Auswerteeinheit in Wirkverbindung gebracht wird.

### Vorteile der Erfindung

Der erfindungsgemäß hergestellte Gassensor, bei welchem das Polymer als eine Polymermatrix ausgebildet ist, die Poren aufweist, hat den Vorteil, daß eine Struktur bereitgestellt wird, die einerseits eine hohe Durchlässigkeit für Gase und andererseits eine große Schichtdicke bzw. Absorption für das betreffende Meßgas zuläßt.

Die Poren, welche in der Polymermatrix ausgebildet sind, ermöglichen, daß das Meßgas schnell durch die Polymermatrix zu den gassensitiven Sensormaterialien diffundieren kann, was wiederum zu kurzen Ansprechzeiten des Gassensors führt.

Die Erfindung ist sowohl bei einem optischen Gassensor als auch bei einem Gassensor anwendbar, bei welchem eine elek-trische Auswertung des Sensormaterials, beispielsweise über eine Messung von Leitfähigkeitsänderungen, erfolgt.

Die Polymermatrix wird bevorzugt dadurch hergestellt, daß ein Gemisch aus Monomeren und einem Vernetzer zusammen mit Porenbildnern erhitzt wird, so daß eine homogene Lösung entsteht. Anschließend wird diese Lösung einem kontrollierten Abkühlprozeß unterzogen, was zu einer definierten Porenbildung führt, da sich der Porenbildner und die Monomere hierbei separieren. Das so entstehende Phasengemisch bzw. die Monomer/Vernetzer-Phase wird dann durch Bestrahlung mit Licht einer geeigneten Wellenlänge polymerisiert, so daß sich ein dreidimensionales Polymernetzwerk ausbildet.

Im Anschluß an die Polymerisierung kann die Porenbildnerphase durch ein Lösungsmittel aus dem Polymernetzwerk herausgelöst werden. Dies führt dann zu der dreidimensionalen Polymermatrix. Das gassensitive Sensormaterial wird anschließend mittels eines Lösungsmittels in das Volumen der dreidimensionalen Polymermatrix eingebracht, so daß das gesamte Bulkmaterial der Polymermatrix mit dem Sensormaterial dotiert ist. Die so hergestellte Polymermatrix des Gassensors nach der Erfindung, in welcher das gassensitive Sensormaterial eingebettet ist, stellt einen durchgehend vernetzten Probekörper dar.

Neben einer Dotierung des Volumens der Polymermatrix ist es auch möglich, die Wände der gegebenenfalls kanalartig ausgebildeten Poren der Polymermatrix mit dem Sensormaterial zu dotieren.

Grundsätzlich sind alle in flüssiger Phase polymerisierbaren Monomere zur Herstellung der Polymermatrix geeignet. Die eingesetzten Monomere müssen jedoch die Voraussetzung erfüllen, daß sie mit den verwendeten Porenbildnern nicht mischbar sind und kompatibel mit dem eingesetzten Sensormaterial sind.

Bei einer bevorzugten Ausführungsform ist das Polymer ein hydrolyse-stabiles und inertes Polymer. Beispielsweise können als Ausgangsstoff für das Polymer Monomere, wie Styrole, Acrylate und Vinylverbindungen, zusammen mit einem jeweils geeigneten Vernetzer eingesetzt werden. Insbesondere können ter-Butylstyrole und deren vernetzende Analoge, wie Divinylstyrole, oder Methacrylate, wie Methylmethacrylat oder Ethylenglycoldimethacrylat, eingesetzt werden.

Die Poren der Polymermatrix sind mittels eines Porenbildners gefertigt, der fluorierte Stoffe umfaßt. Derartige fluorierte Stoffe umfassende Porenbildner sind beispielsweise Perfluorododecyl-Decan und -eicosan.

Um ein vorteilhaftes Ansprechverhalten des Sensors zu erhalten, können die Poren eine Vorzugsorientierung aufweisen. Die Vorzugsorientierung der Poren erfolgt bei Herstellung der Polymermatrix in situ durch Wechselwirkung zwischen dem Porenbildner und einer Substratoberfläche, auf welcher die Herstellung erfolgt. Alternativ können die Poren durch elektrische und/oder magnetische Felder orientiert werden.

Beim Einsatz des Gassensors als Kohlendioxidsensor kann das gassensitive Sensormaterial aus Tetraoctylammoniumhydroxid und/oder Kresolpurpur gebildet sein.

Der Gassensor kann zur Detektion verschiedenster Gase, wie CO₂, CO, NO₂, NO NH₃, CHₓ, H₂S, HCl oder Ozon eingesetzt werden. Das gassensitive Sensormaterial ist nur an das jeweilige Gas anzupassen.

Wenn der Gassensor als optischer Gassensor ausgebildet ist, stellt die Auswerteeinheit eine optische Auswerteeinheit dar, die vorzugsweise mindestens einen Emitter, wie beispielsweise eine LED, und mindestens einen Detektor, wie eine Photodiode, aufweist.

Bei einem optischen Gassensor weisen die Poren der Polymermatrix bevorzugt eine Größe auf, die unterhalb der Wellenlänge einer von dem Emitter abgegebenen Strahlung liegt. So liegt die Wellenlänge vorteilhaft unterhalb derjenigen des sichtbaren Lichts, d.h. unterhalb von 400 nm, insbesondere unterhalb von 200 nm.

Bei einer bevorzugten Ausführungsform des Gassensors, welcher als optischer Gassensor ausgebildet ist, ist der Detektor mit der Polymermatrix überzogen. Alternativ kann aber auch der in Richtung des Detektors weisende Bereich des Emitters mit der Polymermatrix überzogen sein.

Bei einem eine LED und mindestens einen Detektor aufweisenden Gassensor strahlt die LED Licht ab, das teilweise durch die Polymermatrix hindurch auf den als Photodiode ausgebildeten Detektor trifft. Wenn die einem Meßgas ausgesetzte Polymermatrix aufgrund eines in dem Meßgas enthaltenen Gases, wie Kohlendioxid, eine Farbänderung erfährt, verändert sich der Photostrom.

Weitere Vorteile und vorteilhafte Ausgestaltungen des Gegenstandes nach der Erfindung sind der Beschreibung, der Zeichnung und den Patentansprüchen entnehmbar.

### Zeichnung

Zwei Ausführungsbeispiele eines erfindungsgemäß hergestellten Gassensors sind in der Zeichnung schematisch vereinfacht dargestellt und werden in der nachfolgenden Beschreibung näher erläutert. Es zeigen
Figur 1 einen Diffusionsweg eines Gases in einer Polymermatrix eines Gassensors;
Figur 2 eine Draufsicht auf einen Gassensor in einer Prinzipskizze;
Figur 3 einen Schnitt entlang der Linie III-III in Figur 2; und
Figur 4 eine alternative Ausführungsform eines optischen Gassensors in einer Prinzipskizze.

### Beschreibung der Ausführungsbeispiele

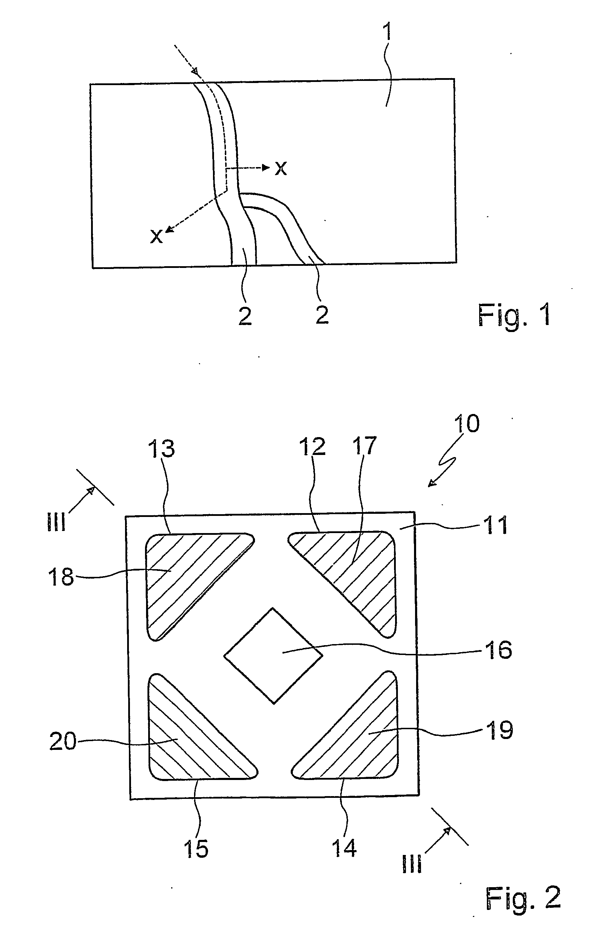

In Figur 1 ist stark abstrahiert eine Polymermatrix 1 dargestellt, welche zum Einsatz bei einem Gassensor nach der Erfindung ausgelegt ist. Die Polymermatrix 1, welche beispielsweise aus ter-Butylstyrol besteht, weist eine Vielzahl von als Kanäle ausgebildeten Poren 2 auf, welche mit Luft gefüllt sind und von denen in Figur 1 der Übersichtlichkeit halber nur zwei dargestellt sind. Die Poren 2 haben einen Durchmesser kleiner 200 nm.

Des weiteren ist in der Polymermatrix 1 ein für Kohlendioxid sensitives Sensormaterial homogen eingebettet. Von diesem Sensormaterial sind in der Zeichnung zwei Zentren dargestellt, die jeweils mit X gekennzeichnet sind.

Enthält ein zu analysierendes Meßgas Kohlendioxid, so kann letzteres durch die Kanäle 2 und das Volumen der Sensormatrix 1 zu den Sensormaterialien X diffundieren. Der Weg des Kohlendioxids in der Polymermatrix 1 durch die Poren 2 und das Volumen der Polymermatrix ist in Figur 1 mit gestrichelten Pfeilen dargestellt. Durch die Beaufschlagung der Polymermatrix mit Kohlendioxid verändert diese ihre Farbe bzw. Durchlässigkeit für Licht einer bestimmten Wellenlänge.

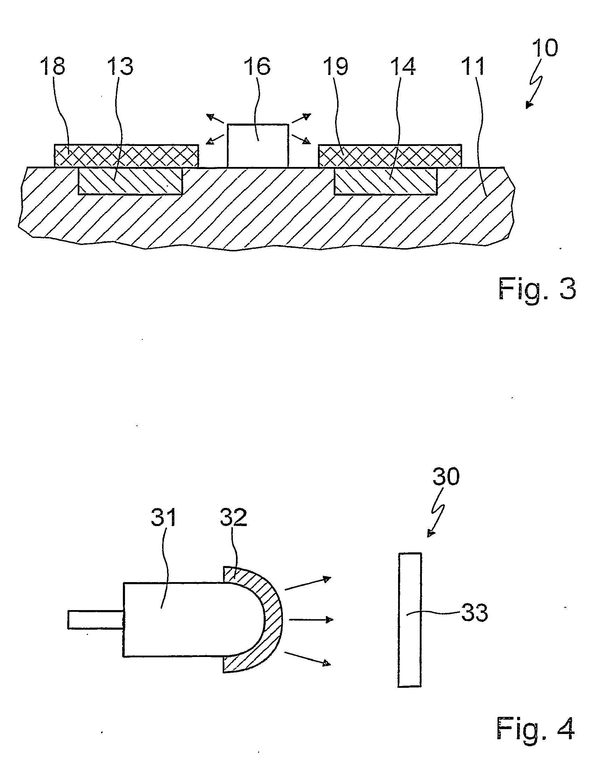

In den Figuren 2 und 3 ist ein erfindungsgemäß hergestellter Gassensor 10 dargestellt. Der Gassensor 10 ist als Brandmeldesensor einsetzbar und zu diesem Zwecke in einem nicht dargestellten, lichtdicht gekapselten Gehäuse mit beispielsweise labyrinthartig ausgeführten Eintrittsöffnungen für Gas angeordnet.

Der Gassensor 10 umfaßt ein Substrat 11 aus Silizium; an welchem vier als Photodioden ausgebildete Detektoren 12 bis 15 ausgebildet sind. Die Photodioden 12 bis 15 dienen zur Detektion von Licht, welches von einem als Emitter dienenden LED 16 abgegeben wird. Die Strahlung der LED 16 ist in Figur 3 mittels Pfeilen angedeutet. Die Photodioden 12 bis 15 und die LED 16 bilden hier die Auswerteeinheit.

Von den vier Photodioden 12 bis 15 werden drei als Detektoren, d.h. als Meßphotodioden, und eine als Referenzphotodiode genutzt. Die drei Meßphotodioden haben in der Zeichnung die Bezugsziffern 12 bis 14 und die Referenzphotodiode hat die Bezugsziffer 15.

Die drei Meßphotodioden 12 bis 14 sind jeweils von einer porösen Polymermatrix 17, 18 bzw. 19 überzogen, welche entsprechend der in Figur 1 dargestellten Polymermatrix ausgebildet sind und mithin ein gassensitives Sensormaterial umfassen. Die Referenzphotodiode 15 ist von einer als Referenzschicht dienenden Polymerschicht 20 überzogen, welche frei von gassensitiven Bestandteilen ist.

Die Polymermatrizen 17 bis 19 sind einem Meßgas ausgesetzt. Enthält das Meßgas Kohlendioxid, so ändert sich die Farbe der Polymermatrizen 17 bis 19, wodurch sich deren Durchlässigkeit für das von der LED 16 emittierte Licht ändert. Dies führt wiederum zu einer Änderung des an den drei Meßphotodioden 12 bis 14 gemessenen Photostroms.

In Figur 4 ist der prinzipielle Aufbau einer alternativen Ausführungsform eines Gassensors 30 dargestellt, der grundsätzlich nach dem gleichen Prinzip arbeitet wie der Gassensor nach den Figuren 2 und 3.

Entsprechend dem Gassensor nach den Figuren 2 und 3 ist der Gassensor 30 in einem lichtdicht geschlossenen Gehäuse angeordnet.

Der Gassensor 30 umfaßt eine LED 31, welche von einer Polymermatrix 32 überzogen ist und welche mit einer Photodiode 33 zusammenwirkt. Die Polymermatrix 32 ist einem Meßgas ausgesetzt. Enthält das Meßgas ein Gas, auf das ein in der Polymermatrix 32 eingebettetes Sensormaterial sensitiv reagiert, so ändert sich die Durchlässigkeit der Polymermatrix 32 für von der LED 31 abgegebenes Licht. Dies führt wiederum zu einer Änderung des mittels der Photodiode 33 gemessenen Photostroms.

## Patentansprüche

1. Verfahren zur Herstellung eines Gassensors, wobei ein gassensitives Sensormaterial (X) in ein Polymer eingebettet wird und mit einer Auswerteeinheit (16, 12 -15; 31, 33) in Wirkverbindung gebracht wird, wobei das Polymer als eine Polymermatrix (1, 17-19; 32) ausgebildet wird, die Poren (2) aufweist, **dadurch gekennzeichnet, dass** die Poren (2) mittels eines fluorierte Stoffe umfassenden Porenbildners gefertigt werden.

2. Verfahren nach Anspruch 1, **dadurch gekennzeichnet, dass** das Polymer ein hydrolysestabiles und inertes Polymer ist.

3. Verfahren nach Anspruch 1 oder 2, **dadurch gekennzeichnet, dass** das Polymer aus in flüssiger Phase polymerisierbaren Monomeren gefertigt ist.

4. Verfahren nach einem der Ansprüche 1 bis 3, **dadurch gekennzeichnet, dass** die Poren (2) eine Vorzugsorientierung aufweisen.

5. Verfahren nach einem der Ansprüche 1 bis 4, **dadurch gekennzeichnet, dass** das gassensitive Sensormaterial (X) im Volumen der Polymermatrix (1; 17 - 19; 32) gelöst ist.

6. Verfahren nach einem der Ansprüche 1 bis 5, **dadurch gekennzeichnet, dass** das gassensitive Sensormaterial (X) aus Tetraoctylammoniumhydroxid und/oder Kresolpurpur gebildet ist.

7. Verfahren nach einem der Ansprüche 1 bis 6, **dadurch gekennzeichnet, dass** die Auswerteeinheit als eine optische Auswerteeinheit ausgebildet ist, die mindestens einen Emitter (16; 31) und mindestens einen Detektor (12 - 15; 33) umfasst.

8. Verfahren nach Anspruch 7, **dadurch gekennzeichnet, dass** die Poren (2) eine Größe aufweisen, die unterhalb der Wellenlänge einer von dem Emitter (16; 31) abgegebenen Strahlung liegt.

9. Verfahren nach Anspruch 7 oder 8, **dadurch gekennzeichnet, dass** der Detektor (12 - 14) mit der Polymermatrix (17 - 19) überzogen ist.

## Claims

1. Process for producing a gas sensor by embedding a gas-sensitive sensor material (X) into a polymer and operatively connecting it to an evaluation unit (16, 12-15; 31, 33), the polymer taking the form of a polymer matrix (1, 17-19; 32) having pores (2), **characterized in that** the pores (2) are manufactured by means of a pore former comprising fluorinated substances.

2. Process according to Claim 1, **characterized in that** the polymer is a hydrolysis-stable and inert polymer.

3. Process according to Claim 1 or 2, **characterized in that** the polymer has been manufactured from monomers polymerizable in the liquid phase.

4. Process according to any of Claims 1 to 3, **characterized in that** the pores (2) have a preferential orientation.

5. Process according to any of Claims 1 to 4, **characterized in that** the gas-sensitive sensor material (X) has been dissolved in the volume of the polymer matrix (1; 17-19; 32).

6. Process according to any of Claims 1 to 5, **characterized in that** the gas-sensitive sensor material (X) has been formed from tetraoctylammonium hydroxide and/or cresol purple.

7. Process according to any of Claims 1 to 6, **characterized in that** the evaluation unit takes the form of an optical evaluation unit comprising at least one emitter (16; 31) and at least one detector (12-15; 33).

8. Process according to Claim 7, **characterized in that** the pores (2) have a size below the wavelength of radiation emitted by the emitter (16; 31).

9. Process according to Claim 7 or 8, **characterized in that** the detector (12-14) has been coated with the polymer matrix (17-19).

## Revendications

1. Procédé de fabrication d'un capteur de gaz, dans lequel un matériau (X) de capteur sensible au gaz est incorporé dans un polymère et est mis en coopération avec une unité d'évaluation (16, 12-15; 31, 33), le polymère étant formé d'une matrice polymère (1, 17-19; 32) qui présente des pores (2),
**caractérisé en ce que**
les pores (2) sont réalisés au moyen d'un agent de formation de pores qui contient des substances fluorées.

2. Procédé selon la revendication 1, **caractérisé en ce que** le polymère est un polymère résistant à l'hydrolyse et inerte.

3. Procédé selon les revendications 1 ou 2, **caractérisé en ce que** le polymère est réalisé à partir de monomères aptes à polymériser en phase liquide.

4. Procédé selon l'une des revendications 1 à 3, **caractérisé en ce que** les pores (2) présentent une orientation préférentielle.

5. Procédé selon l'une des revendications 1 à 4, **caractérisé en ce que** le matériau (X) de capteur sensible au gaz est dissous dans le volume de la matrice polymère (1; 17-19; 32).

6. Procédé selon l'une des revendications 1 à 5, **caractérisé en ce que** le matériau (X) de capteur sensible au gaz est formé d'hydroxyde de tétraoctylammonium et/ou de pourpre de crésol.

7. Procédé selon l'une des revendications 1 à 6, **caractérisé en ce que** l'unité d'évaluation est configurée comme unité d'évaluation optique qui comporte au moins un émetteur (16; 31) et au moins un détecteur (12-15; 33).

8. Procédé selon la revendication 7, **caractérisé en ce que** les pores (2) présentent une taille inférieure à la longueur d'onde du rayonnement émis par l'émetteur (16; 31).

9. Procédé selon les revendications 7 ou 8, **caractérisé en ce que** le détecteur (12-14) est recouvert par la matrice polymère (17-19).
